# EUROPÄISCHE PATENTSCHRIFT

(11) **EP 3 419 855 B1**
(45) Veröffentlichungstag und Bekanntmachung des Hinweises auf die Patenterteilung: **25.02.2026**
(21) Anmeldenummer: 16808609.8
(22) Anmeldetag: 06.12.2016
(51) Int. Cl.: B60L 53/53, B60L 53/63, B60L 53/64, B60L 53/65, B60L 53/66, B60L 53/14

(54) **VERFAHREN UND ZENTRALES STEUERSYSTEM ZUR STEUERUNG DES ELEKTRISCHEN LADENS EINER GRUPPE VON FAHRZEUGEN**
METHOD AND CENTRAL CONTROL SYSTEM FOR CONTROLLING THE ELECTRICAL CHARGING OF A GROUP OF VEHICLES
PROCÉDÉ ET SYSTÈME DE COMMANDE CENTRAL POUR COMMANDER LE CHARGEMENT ÉLECTRIQUE D'UN GROUPE DE VÉHICULES

(30) Priorität: 24.02.2016 DE 102016202816
(43) Veröffentlichungstag der Anmeldung: 02.01.2019
(73) Patentinhaber: Bayerische Motoren Werke Aktiengesellschaft, 80809 München (DE)
(72) Erfinder: ELLGAS, Simon, Mountain View, California 94041-0000 (US); MARCIAL-SIMON, Enrique, 97209 Veitshöchheim (DE); MEHLHORN, Rainer, 85652 Landsham (DE); PFAB, Xaver, 85570 Herdweg (DE); STAUNER, Thomas, 85716 Unterschleissheim (DE)
(86) Internationale Anmeldenummer: PCT/EP2016/079916
(87) Internationale Veröffentlichungsnummer: WO 2017/144135

(56) Entgegenhaltungen:
- WO-A2-2014/083425
- DE-A1- 102011 003 993
- DE-A1- 102011 008 675
- DE-T5- 112012 005 488
- US-A1- 2013 057 211
- US-A1- 2015 298 567
- US-A1- 2016 009 192
- BOERIU HORATIU: "BMW i ChargeForward Pilot Launches in Bay Area", WWW.BMWBLOG.COM, 4 August 2015 (2015-08-04), online, pages 1 - 14, XP55808911, Retrieved from the Internet <URL:https://www.bmwblog.com/2015/08/04/bmw-i-chargeforward-pilot-launches-in-bay-area/> [retrieved on 20210531]

## Beschreibung

Die Erfindung betrifft ein Verfahren zur Steuerung des elektrischen Ladens einer Gruppe von Fahrzeugen sowie ein entsprechendes Steuersystem.

Aus dem Stand der Technik (Programm "BMW i ChargeForward", siehe z.B. https://www.engadget.com/2015/07/31/bmw-pge-chargeforward/?ncid=rss_truncated) ist es bekannt, das Laden der Energiespeicher einer Gruppe bzw. eines Pools von elektrisch antreibbaren Fahrzeugen über ein Steuersystem derart zu steuern, dass auch Anforderungen des Betreibers des zum Laden verwendeten Stromnetzes im Hinblick auf eine Leistungsreduktion berücksichtigt werden. Mit anderen Worten kann bei entsprechender Anforderung des Stromnetzbetreibers das Laden bestimmter Fahrzeuge des Fahrzeugpools unterbrochen oder verzögert werden, um hierdurch die Leistungsaufnahme im Stromnetz zu vermindern. Dabei wird das Laden nur von solchen Fahrzeugen ausgesetzt, bei denen die Unterbrechung des Ladevorgangs keinen Einfluss auf eine vom Nutzer des Fahrzeugs spezifizierte Abfahrtszeit hat, d.h. auch bei späterer Wiederaufnahme des Ladevorgangs ist immer noch genügend Zeit zur Verfügung, um das Fahrzeug komplett bzw. bis auf einen vorgegebenen Ladezustand zu laden.

Bei dem obigen Verfahren, bei dem das Laden eines Fahrzeugpools zum Ausgleich von Überlasten im Stromnetz beeinflusst wird, kann der Fall auftreten, dass eine vom Stromnetzbetreiber erwünschte Leistungsreduktion über die Unterbrechung von Ladevorgängen der fahrzeugseitigen Energiespeicher nicht erreicht werden kann, da zwecks Einhaltung von Abfahrtszeiten nur für wenige Fahrzeuge das Laden ausgesetzt werden kann.

Die Druckschrift DE 10 2011 008 675 A1 offenbart ein Verfahren zum Aufladen der Batterien von Fahrzeugen einer Fahrzeugflotte gemäß dem Oberbegriff des Anspruchs 1, wobei die Fahrzeuge möglichst Ladeprofile mit geringen Kosten verwenden.

Die Druckschrift US 2015/0298567 A1 offenbart ein Verfahren zur Steuerung des elektrischen Ladens von elektrischen Fahrzeugen. Dabei wird ein Befehl zur Verminderung des elektrischen Energieverbrauchs von einem Energieversorger an einen Server übermittelt, der daraufhin das Aufladen bestimmter elektrischer Fahrzeuge mittels eines Unterbrechungsbefehls unterbricht.

In dem Dokument US 2016/009192 A1 wird ein Verfahren zur Optimierung der Verwendung von elektrischer Energie aus einem elektrischen Netz beschrieben. Dabei werden elektrische Vorrichtungen, wie z.B. elektrische Plug-In-Fahrzeuge, mit einem Ladeprofil geladen, das auf einer Kostenfunktion für das elektrische Netz basiert.

Die Druckschrift DE 10 2011 003 993 A1 offenbart einen Laderegler zum Laden einer Batterie eines Plug-In-Fahrzeugs, wobei der Laderegler einen Ladezeitplan bestimmt, der eine erste Ladezeit zum Laden der Batterie mit einem Solarphotovoltaikerzeugungssystem und eine zweite Ladezeit zum Laden der Batterie um eine Fehlmenge elektrischer Energie mit einer anderen elektrischen Energiequelle abbildet. In dieser Druckschrift wird unter anderem auch offenbart, den Ladevorgang der Batterie vorzuverlegen, wenn der Laderegler eine frühere Abfahrtszeit als gewöhnlich erkennt.

Aufgabe der Erfindung ist es deshalb, den Vorgang des Ladens einer Gruppe von Fahrzeugen derart zu steuern, dass auf Anforderung eines Stromnetzbetreibers der Ladevorgang einer großen Anzahl von Fahrzeugen unterbrochen werden kann.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge aus dem Stromnetz Strom zum Laden eines fahrzeugseitigen elektrischen Energiespeichers zum Antrieb des jeweiligen Fahrzeugs beziehen. Mit anderen Worten sind die Fahrzeuge elektrisch antreibbare Fahrzeuge, wie z.B. reine Elektrofahrzeuge oder Hybridfahrzeuge. In dem erfindungsgemäßen Verfahren kann ein zentrales Steuersystem mit den jeweiligen Fahrzeugen der Gruppe sowie mit einem Server des Stromnetzbetreibers kommunizieren. Unter einem zentralen Steuersystem ist dabei ein Steuersystem bzw. eine Steuereinrichtung zu verstehen, welche das Laden aller Fahrzeuge der Gruppe steuert. Dieses Steuersystem ist insbesondere über Software auf einem entsprechenden Server realisiert. Das zentrale Steuersystem kann das Laden zumindest eines Teils der fahrzeugseitigen Energiespeicher in Antwort auf einen empfangenen Reduktionsbefehl aussetzen, der vom Server des Stromnetzbetreibers stammt und einen Leistungsbetrag festlegt, um den die Leistungsaufnahme der Gruppe von Fahrzeugen aus dem Stromnetz zu vermindern ist.

In dem erfindungsgemäßen Verfahren sind für ein oder mehrere spezifische Fahrzeuge der Gruppe vorab jeweils ein Ladezeitfenster, ein Abfahrtszeitpunkt und ein Sollladezustand (vorzugsweise der vollgeladene Zustand) des fahrzeugseitigen Energiespeichers zum Abfahrtszeitpunkt festgelegt. Dabei ist beim Ladevorgang des fahrzeugseitigen Energiespeichers gemäß dem Ladezeitfenster ein Ladezeitkriterium erfüllt, so dass (d.h. bei Erfüllung des Ladezeitkriteriums) der Ladevorgang ganz im Ladezeitfenster liegt oder das ganze Ladezeitfenster umfasst und gleichzeitig sichergestellt ist, dass der Sollladezustand spätestens zum Abfahrtszeitpunkt erreicht ist. Darüber hinaus ist ein Kostenwert für das Ladezeitfenster gemäß einer Kostenfunktion vorgegeben, welche eine Kostenhöhe in Abhängigkeit von dem Ladevorgang gemäß dem Ladezeitfenster angibt. Die Kostenfunktion kann dabei unterschiedlich gewählt sein, vorzugsweise spiegelt sie die monetären Stromkosten für den entsprechenden Ladevorgang wider, wie weiter unten nochmals erwähnt wird.

Die oben genannten, vorab festgelegten Größen sind dem zentralen Steuersystem bekannt, d.h. sie sind in einem entsprechenden Speicher des Steuersystems hinterlegt. Dabei sind das Ladezeitfenster und der Abfahrtszeitpunkt und der Sollladezustand für ein jeweiliges spezifisches Fahrzeug, welche vorab festgelegt sind, nutzerspezifische Daten, welche ein Nutzer des jeweiligen spezifischen Fahrzeugs an einem Endgerät und insbesondere an einem mobilen Endgerät (z.B. einem Mobiltelefon) eingegeben hat, wobei diese Daten von dem Endgerät an das zentrale Steuersystem übermittelt werden. Gemäß der obigen Definition ist unter einem spezifischen Fahrzeug ein solches Fahrzeug aus der Gruppe von Fahrzeugen zu verstehen, bei dem das Ladezeitfenster, der Abfahrtszeitpunkt und der Sollladezustand vorab festgelegt sind.

Im erfindungsgemäßen Verfahren übermittelt das zentrale Steuersystem zu einem jeweiligen spezifischen Fahrzeug zumindest eines Teils der spezifischen Fahrzeuge ein modifiziertes Ladezeitfenster. Dabei wird der Ladevorgang gemäß dem modifizierten Ladezeitfenster unter Erfüllung des Ladezeitkriteriums bei unverändertem Abfahrtszeitpunkt und Sollladezustand durchgeführt, d.h. der vorab festgelegte Abfahrtszeitpunkt und Sollladezustand bleiben gleich und das Ladezeitkriterium wird gemäß obiger Definition nunmehr basierend auf dem modifizierten Ladezeitfenster berücksichtigt. Das modifizierte Ladezeitfenster zeichnet sich dadurch aus, dass es zumindest einen Zeitabschnitt umfasst, der vor dem Beginn des nicht-modifizierten (d.h. vorab festgelegten) Ladezeitfensters liegt. Ferner ist der Kostenwert gemäß der Kostenfunktion für das modifizierte Ladezeitfenster genauso groß oder kleiner als der Kostenwert für das nicht-modifizierte Ladezeitfenster. Für spezifische Fahrzeuge, bei denen die Ladezeitfenster nicht modifiziert werden, wird der Ladevorgang gemäß dem nicht-modifizierten Ladezeitfenster durchgeführt. Die Durchführung des Ladevorgangs der jeweiligen Fahrzeuge wird vorzugsweise rein durch das entsprechende Fahrzeug, jedoch ggf. auch unter Mitwirkung des zentralen Steuersystems, gesteuert.

Mit dem erfindungsgemäßen Verfahren wird erreicht, dass vorgegebene Ladezeitfenster beim Laden von Fahrzeugen einer Fahrzeuggruppe geeignet vorverlegt werden, ohne dass die Kosten für den Ladevorgang bzw. der Abfahrtszeitpunkt beeinträchtigt werden. Auf diese Weise stehen im Schnitt mehr Fahrzeuge im Falle eines Reduktionsbefehls des Stromnetzbetreibers zur Verfügung.

Die Kosten gemäß der Kostenfunktion können je nach Anwendungsfall unterschiedlich festgelegt werden. Vorzugsweise ist die Kostenfunktion abhängig von den monetären Stromkosten für einen Ladevorgang gemäß dem Ladezeitfenster und/oder von der Abgasmenge, die durch das Stromnetz beim Ladevorgang gemäß dem Ladezeitfenster erzeugt wird, und/oder von dem Anteil an regenerativen Energien, die von dem Stromnetz beim Ladevorgang gemäß dem Ladezeitfenster verwendet werden. Die Kostenhöhe gemäß der Kostenfunktion ist dabei umso größer, je größer die monetären Stromkosten und/oder die Abgasmenge ist und/oder je kleiner der Anteil an regenerativen Energien ist. Die Abgasmenge bezieht sich vorzugsweise auf die Menge an erzeugtem CO₂, kann sich jedoch gegebenenfalls auch auf andere Abgase, wie z.B. Stickoxide, beziehen bzw. diese anderen Abgase mit berücksichtigten.

In einer besonders bevorzugten Ausführungsform des erfindungsgemäßen Verfahrens wird im Falle, dass das zentrale Steuersystem das Laden des fahrzeugseitigen Energiespeichers eines spezifischen Fahrzeugs in Antwort auf einen Reduktionsbefehl aussetzt, ein neues Ladezeitfenster, welches von dem aktuell verwendeten Ladezeitfenster abweicht, von dem zentralen Steuersystem an das spezifische Fahrzeug übermittelt, wobei die Beginn des Ladezeitfensters nach einem vorgegebenen Zeitraum des Aussetzens des Ladens liegt und ansonsten der Ladevorgang gemäß dem neuen Ladezeitfenster das obige Ladezeitkriterium bei unverändertem Abfahrtszeitpunkt und Sollladezustand erfüllt. Es wird somit sichergestellt, dass ein vorgegebener Sollladezustand bei einem entsprechenden Abfahrtszeitpunkt auch bei Unterbrechung des Ladevorgangs für den betrachteten fahrzeugseitigen Energiespeicher erreicht wird.

In einer bevorzugten Variante der soeben beschriebenen Ausführungsformen ist in dem neuen Ladezeitfenster ein Puffer enthalten, der eine gegenüber einer erwarteten Ladeeffizienz des fahrzeugseitigen Energiespeichers verminderte Ladeeffizienz berücksichtigt, um zu verhindern, dass der fahrzeugseitige Energiespeicher vor Beginn des neuen oder vorbestimmten Ladezeitfensters das Laden beginnt. Hierdurch wird vermieden, dass sich das neue Ladezeitfenster unter Umständen mit dem Zeitraum des Aussetzens des Ladens des Energiespeichers überschneidet.

In einer weiteren bevorzugten Variante des erfindungsgemäßen Verfahrens werden alle modifizierten Ladezeitfenster auf die vorab festgelegten Ladezeitfenster zurückgesetzt, nachdem eine vorbestimmte Anzahl von Reduktionsbefehlen von dem zentralen Steuersystem verarbeitet wurde.

In einer weiteren, besonders bevorzugten Ausführungsform des erfindungsgemäßen Verfahrens ist an das Stromnetz ein stationäres Energiespeichersystem angeschlossen. Dieses stationäre Energiespeichersystem ist vorzugsweise ein stationärer Batteriespeicher und wird durch das zentrale Steuersystem derart angesteuert, dass im Falle, dass die Verminderung der Leistungsaufnahme der Gruppe von Fahrzeugen um den Leistungsbetrag gemäß einem Reduktionsbefehl nicht ausschließlich durch Aussetzen des Ladens von Energiespeichern jeweiliger Fahrzeuge erreicht werden kann, die Leistungsaufnahme des stationären Energiespeichersystems aus dem Stromnetz verringert oder die Leistungsabgabe des stationären Energiespeichersystems in das Stromnetz erhöht wird, so dass die Verminderung der Leistungsaufnahme der Gruppe von Fahrzeugen, die durch Aussetzen des Ladens von Energiespeichern jeweiliger Fahrzeuge erreicht wird, zuzüglich des Betrags der Verringerung der Leistungsaufnahme oder der Erhöhung der Leistungsabgabe des stationären Energiespeichersystems dem Leistungsbetrag gemäß dem Reduktionsbefehl entspricht. Mit dieser Variante der Erfindung wird eine unzureichende Leistungsverminderung von fahrzeugseitigen Energiespeichern über ein stationäres Energiespeichersystem ausgeglichen.

Neben dem oben beschriebenen Verfahren betrifft die Erfindung ein zentrales Steuersystem zur Steuerung des elektrischen Ladens einer Gruppe von Fahrzeugen, welche elektrisch an ein Stromnetz eines Stromnetzbetreibers angeschlossen sind, wobei die jeweiligen Fahrzeuge Strom zum Laden eines fahrzeugseitigen Energiespeichers zum Antrieb des jeweiligen Fahrzeugs beziehen, wobei das zentrale Steuersystem mit den jeweiligen Fahrzeugen sowie mit einem Server des Stromnetzbetreibers kommunizieren kann. Das zentrale Steuersystem kann das Laden zumindest eines Teils der fahrzeugseitigen Energiespeicher in Antwort auf einen empfangenen Reduktionsbefehl aussetzen, der vom Server des Stromnetzbetreibers stammt und einen Leistungsbetrag festlegt, um den die Leistungsaufnahme der Gruppe von Fahrzeugen aus dem Stromnetz zu vermindern ist.

Das zentrale Steuersystem ist derart ausgestaltet, dass in dem zentralen Steuersystem für ein oder mehrere spezifische Fahrzeuge der Gruppe vorab jeweils ein Ladezeitfenster, ein Abfahrtszeitpunkt und ein Sollladezustand des fahrzeugseitigen Energiespeichers zum Abfahrtszeitpunkt festgelegt sind, wobei beim Ladevorgang des fahrzeugseitigen Energiespeichers gemäß dem Ladezeitfenster ein Ladezeitkriterium erfüllt ist, so dass der Ladevorgang ganz im Ladezeitfenster liegt oder das ganze Ladezeitfenster umfasst und gleichzeitig sichergestellt ist, dass der Sollladezustand spätestens zum Abfahrtszeitpunkt erreicht ist, wobei ein Kostenwert für das Ladezeitfenster gemäß einer Kostenfunktion vorgegeben ist, welche eine Kostenhöhe in Abhängigkeit von dem Ladevorgang gemäß dem Ladezeitfenster angibt.

Das zentrale Steuersystem ist ferner derart ausgestaltet, dass es zu einem jeweiligen spezifischen Fahrzeug zumindest eines Teils der spezifischen Fahrzeuge ein modifiziertes Ladezeitfenster übermittelt, woraufhin der Ladevorgang gemäß dem modifizierten Ladezeitfenster unter Erfüllung des Ladezeitkriteriums bei unverändertem Abfahrtszeitpunkt und Sollladezustand durchgeführt wird, wobei das modifizierte Ladezeitfenster zumindest einen Zeitabschnitt umfasst, der vor Beginn des nicht-modifizierten Ladezeitfensters liegt und wobei der Kostenwert gemäß der Kostenfunktion für das modifizierte Ladezeitfenster genauso groß oder kleiner als der Kostenwert für das nicht-modifizierte Ladezeitfenster ist.

Das soeben beschriebene Steuersystem ist vorzugsweise derart ausgestaltet, dass es eine oder mehrere bevorzugte Varianten des erfindungsgemäßen Verfahrens ausführen kann.

Ausführungsbeispiele der Erfindung werden nachfolgend anhand der beigefügten Figuren detailliert beschrieben.

Es zeigen:
- Fig. 1: eine schematische Darstellung einer Infrastruktur, in der eine Ausführungsform des erfindungsgemäßen Verfahrens durchgeführt wird;
- Fig. 2: ein Flussdiagramm, welches den Ablauf einer Ausführungsform des erfindungsgemäßen Verfahrens verdeutlicht; und
- Fig. 3 bis Fig. 6: Diagramme, welche verschiedene Varianten der Anpassung von Ladezeitfenstern wiedergeben.

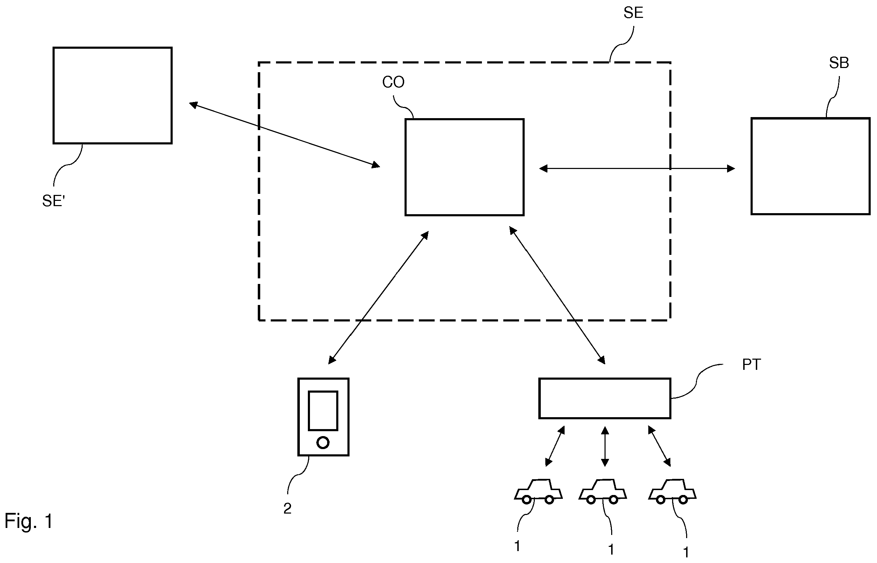

In Fig. 1 ist in schematischer Darstellung eine Infrastruktur zur Durchführung des erfindungsgemäßen Verfahrens dargestellt. Ein Kernbestandteil dieser Infrastruktur ist eine zentrale Steuereinheit CO, welche in einem Server SE integriert ist und zur Steuerung des Ladens einer Flotte aus mehreren elektrisch angetriebenen Fahrzeugen (d.h. der Antriebsbatterien dieser Fahrzeuge) dient. Beispielhaft sind aus dieser Fahrzeugflotte drei Elektrofahrzeuge 1 wiedergegeben. Diese Fahrzeuge sind kommunikationstechnisch über ein Portal PT an die Steuereinheit CO angebunden. Das Steuersystem CO hat über ein geeignetes Steuer-Backend (nicht gezeigt) Zugriff auf das Portal PT, welches wiederum mit den einzelnen Fahrzeugen 1, z.B. über SMS, kommunizieren kann. Mittels des Kommunikationswegs über das Portal PT kann ein Ladezeitfenster von dem Steuersystem CO an die einzelnen Fahrzeuge 1 übermittelt werden, wie weiter unten beschrieben wird.

Zu jedem einzelnen Fahrzeug 1 der Fahrzeugflotte gehört ein Nutzer, der über ein Smartphone 2 verfügt, wobei aus Übersichtlichkeitsgründen nur ein einzelnes Smartphone angedeutet ist. Mit diesem Smartphone kann der Nutzer zum einen über das nicht gezeigte Steuer-Backend mit dem Steuersystem CO und zum anderen über das Portal PT mit seinem Fahrzeug kommunizieren. Insbesondere kann der Nutzer beim Laden der Antriebsbatterie seines Fahrzeugs über ein Stromnetz ein Ladezeitfenster spezifizieren, in dem das Laden besonders günstig ist. Das Laden der Batterie erfolgt dann bevorzugt im Ladezeitfenster. Ebenso kann er einen Abfahrtszeitpunkt sowie den Sollladezustand zum Abfahrtszeitpunkt (in der Regel 100 %) festlegen. Diese Daten werden über das Smartphone 2 sowohl an das zentrale Steuersystem CO als auch das Fahrzeug 1 des Nutzers übermittelt.

Das Steuersystem CO kommuniziert gemäß Fig. 1 auch mit einem Server SE', der zu einem Stromnetzbetreiber gehört, an dessen Stromnetz die Fahrzeuge 1 der Fahrzeugflotte bzw. deren Batterien geladen werden. Darüber hinaus ist in der Infrastruktur der Fig. 1 ein Energiespeichersystem in der Form eines stationären Batteriespeichers SB vorgesehen, der über das Steuersystem CO mittels einer geeigneten Schnittstelle ansteuerbar ist und zu dem Betreiber des Steuersystems CO gehört. Der Betreiber des Steuersystems ist z.B. der Hersteller der Fahrzeuge 1 der Fahrzeugflotte.

Ein Ziel der Infrastruktur der Fig. 1 besteht darin, dass der Stromnetzbetreiber über seinen Server SE' Befehle an das Steuersystem CO im Falle von Überlast in seinem Stromnetz schicken kann, woraufhin das Steuersystem in geeigneter Weise das Laden zumindest eines Teils der gerade ladenden Fahrzeuge 1 für eine vorgegebene Aussetz-Zeitspanne aussetzt, um hierdurch die Last im Stromnetz zu reduzieren. Die Aussetz-Zeitspanne ist in der hier beschriebenen Ausführungsform fest vorgegeben und liegt bei einer Stunde. Es wird dabei nur der Ladevorgang von solchen Fahrzeugen ausgesetzt, bei denen sichergestellt ist, dass nach Wiederaufnahme des Ladevorgangs nach der Zeitspanne des Aussetzens immer noch genug Zeit bis zum Abfahrtszeitpunkt verfügbar ist, um die Antriebsbatterie des entsprechenden Fahrzeugs bis zum Sollladezustand zu laden. Um sicherzustellen, dass in möglichst vielen der Fahrzeuge das Aussetzen des Ladevorgangs möglich ist, wird im Rahmen des hier beschriebenen Verfahrens für zumindest einen Teil der Fahrzeuge 1 ein vorab durch den Nutzer des jeweiligen Fahrzeugs spezifiziertes Ladezeitfenster zeitlich vorverlegt, ohne dass hierdurch entsprechende Kosten für das Laden erhöht werden.

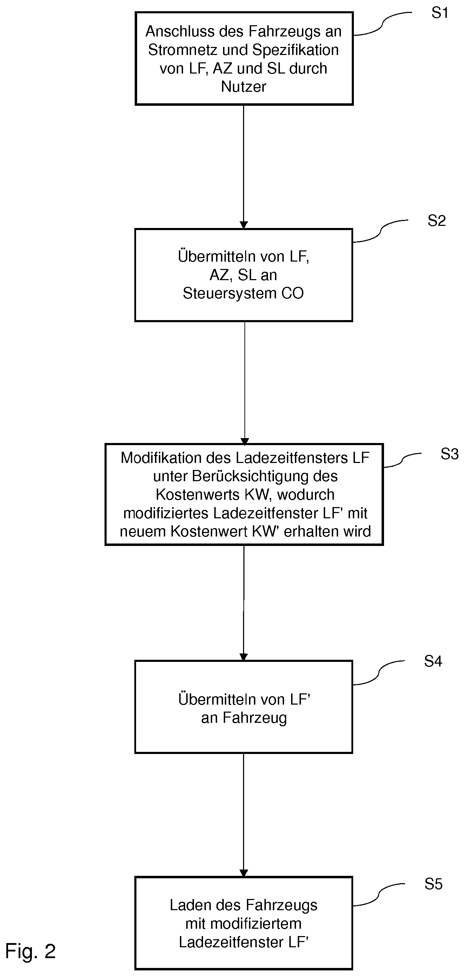

Fig. 2 zeigt ein Flussdiagramm, das anhand eines einzelnen Fahrzeugs der Fahrzeugflotte die Schritte der Verschiebung des Ladezeitpunkts verdeutlicht. Gemäß Schritt S1 der Fig. 2 schließt der Nutzer sein Fahrzeug über eine entsprechende Ladestation an das Stromnetz des Stromnetzbetreibers an, der auch den Server SE' der Fig. 1 betreibt. Über sein Smartphone 2 spezifiziert der Nutzer dabei mittels einer geeigneten App ein Ladezeitfenster LF, in dem das Fahrzeug geladen werden soll, da in diesem Ladezeitraum der bereitgestellte Strom besonders günstig ist. Ferner legt er einen zukünftigen Abfahrtszeitpunkt AZ sowie ein Sollladezustand SL fest, der beim Abfahrtszeitpunkt in der Antriebsbatterie erreicht sein soll. Gegebenenfalls kann z.B. der Sollladezustand bereits vorab für den entsprechenden Nutzer festgelegt sein, so dass der Nutzer diesen Solladezustand über die App nicht neu spezifizieren muss.

In Schritt S2 werden das Ladezeitfenster LF, der Abfahrtszeitpunkt AZ und der Sollladezustand SL über die Infrastruktur der Fig. 1 an das zentrale Steuersystem CO übermittelt. Herkömmlicherweise erfolgt nunmehr das Laden des zum Nutzer gehörigen Fahrzeugs über das vorab festgelegte Ladezeitfenster LF und zwar derart, dass der Ladevorgang der Antriebsbatterie ganz im Ladezeitfenster liegt oder das ganze Ladezeitfenster umfasst und gleichzeitig sichergestellt ist, dass der Sollladezustand SL spätestens zum Abfahrtszeitpunkt AZ des Fahrzeugs erreicht ist. Erfindungsgemäß wird nunmehr das Ladezeitfenster LF durch das Steuersystem CO modifiziert, wie in Schritt S3 der Fig. 2 wiedergegeben ist.

Gemäß Schritt S3 wird bei der Modifikation des Ladezeitfensters LF ein Kostenwert KW berücksichtigt, der die Kosten des Ladens unter Verwendung des Ladezeitfensters LF spezifiziert. In der hier beschriebenen Ausführungsform sind diese Kosten die Stromkosten für den entsprechenden Ladevorgang gemäß dem Ladezeitfenster LF. Alternativ oder zusätzlich können die Kosten mittels einer geeigneten Kostenfunktion auch andere Faktoren, wie z.B. den CO₂-Ausstoß des Stromnetzbetreibers oder den Anteil der regernativen Energien bei Bereitstellung des Stroms für einen Ladevorgang, berücksichtigen. Der Kostenwert KW der hier beschriebenen Ausführungsform ist umso höher, je höher die Stromkosten sind. Konkret wird das Ladezeitfenster LF in Schritt S3 derart verändert, dass zumindest ein Zeitabschnitt des modifizierten Ladezeitfensters LF' vor dem Beginn des nicht-modifizierten Ladezeitfensters LF liegt. Der Ladevorgang gemäß dem modifizierten Ladezeitfenster LF' ist wiederum derart ausgestaltet, dass der Ladevorgang ganz im Ladezeitfenster LF' liegt oder das ganze Ladezeitfenster LF' umfasst und gleichzeitig sichergestellt ist, dass der Sollladezustand spätestens zum Abfahrtszeitpunkt erreicht ist. Das modifizierte Ladezeitfenster LF' wurde darüber hinaus so gewählt, dass es kostenneutral ist, d.h. der Kostenwert KW', der sich für das modifizierte Ladezeitfenster LF' beim Laden mit diesem Ladezeitfenster ergibt, d.h. der Strompreis für diesen Ladevorgang, ist genauso groß bzw. gegebenenfalls auch kleiner als der Kostenwert KW des nicht-modifizierten Ladezeitfensters.

In Schritt S4 wird schließlich das modifizierte Ladezeitfenster LF' an das Fahrzeug des Nutzers übermittelt, woraufhin der Ladevorgang des Fahrzeugs in Schritt S5 nicht mit dem ursprünglichen Ladezeitfenster LF, sondern mit dem modifizierten Ladezeitfenster LF' durchgeführt wird, wobei der Abfahrtszeitpunkt AZ und der Sollladezustand SL unverändert bleiben. Auf diese Weise wird zumindest ein Teil des Ladevorgangs vorverlegt, ohne dass die Kosten für den Ladevorgang negativ beeinflusst werden. Durch die Vorverlegung des Ladezeitfensters wird die Wahrscheinlichkeit erhöht, dass bei einem entsprechenden Befehl des Stromnetzbetreibers von dem Server SE' der Ladevorgang des betrachteten Fahrzeugs die vorgegebene Aussetz-Zeitspanne unterbrochen werden kann. Dies liegt daran, dass es wahrscheinlicher wird, dass bei Wiederaufnahme des Ladevorgangs nach der Aussetz-Zeitspanne immer noch genügend Zeit zur Verfügung steht, um den Sollladezustand spätestens zum Abfahrtszeitpunkt des Fahrzeugs zu erreichen.

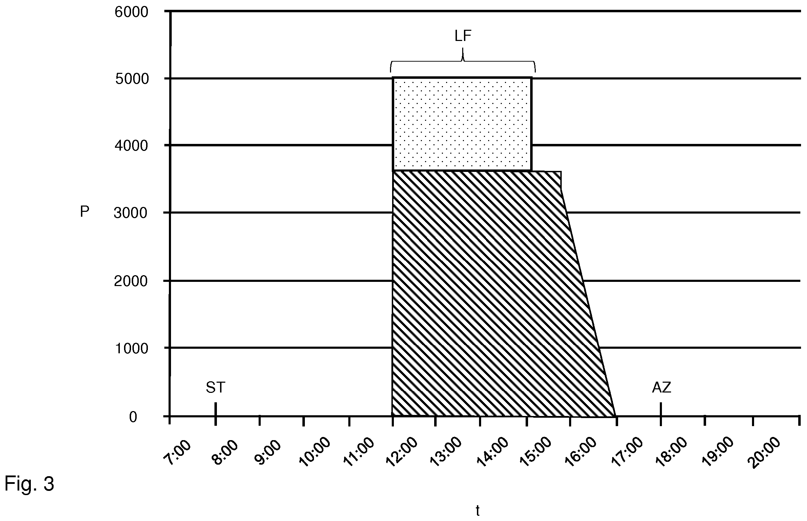

Fig. 3 bis Fig. 5 zeigen verschiedene Szenarien der Festlegung eines Ladezeitfensters. In diesen Figuren ist entlang der Abszisse die Tageszeit t und entlang der Ordinate die Ladeleistung P der Antriebsbatterie in einem entsprechenden Fahrzeug wiedergegeben. In allen Figuren ist durch einen Block mit schräger Schraffur der Ladevorgang (d.h. die Leistungsaufnahme) der Antriebsbatterie und durch einen gepunkteten Block das Ladezeitfenster angedeutet. Dabei ist zu beachten, dass durch die Höhe des Blocks des Ladezeitfensters nicht die Ladeleistung P repräsentiert wird. Vielmehr ist lediglich die Breite des entsprechenden gepunkteten Blocks von Relevanz, welche der Größe des Ladezeitfensters entspricht.

Fig. 3 zeigt das Laden mit dem ursprünglich im Fahrzeug hinterlegten Ladezeitfenster LF. Das Fahrzeug wurde dabei zum Zeitpunkt ST (d.h. 8:00 Uhr) an das Stromnetz angeschlossen. Der Abfahrtszeitpunkt AZ wurde durch den Fahrzeugnutzer auf 18:00 Uhr gesetzt. Gemäß dem Ladezeitfenster wird der Ladevorgang derart gewählt, dass er zu Beginn des Ladezeitfensters um 12:00 Uhr beginnt und um 17:00 Uhr bei Erreichen des Sollladezustands endet, der in der hier beschriebenen Ausführungsform bei 100 % liegt. Der Ladevorgang ist dabei länger als das Ladezeitfenster, da am Ende des Ladezeitfensters um 15:00 Uhr noch nicht der Sollladezustand erreicht ist. In dem Szenario der Fig. 3 ist in dem Ladezeitfenster LF der Strompreis am günstigsten, mit anderen Worten ist der Strompreis außerhalb des Ladezeitfensters LF teurer als innerhalb des Ladezeitfensters. Wie man ferner aus Fig. 3 erkennt, tritt eine Degradation der Antriebsbatterie zum Ende des Ladevorgangs auf, d.h. die Leistungsaufnahme nimmt zum Ende des Ladevorgangs hin deutlich ab.

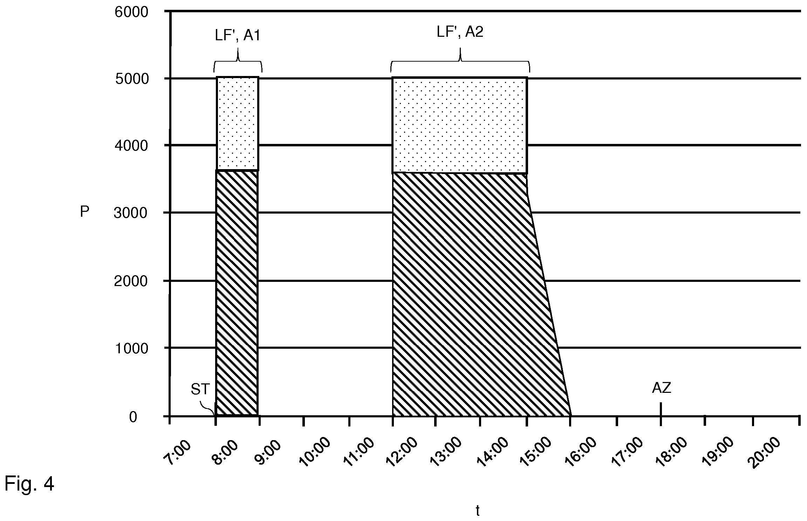

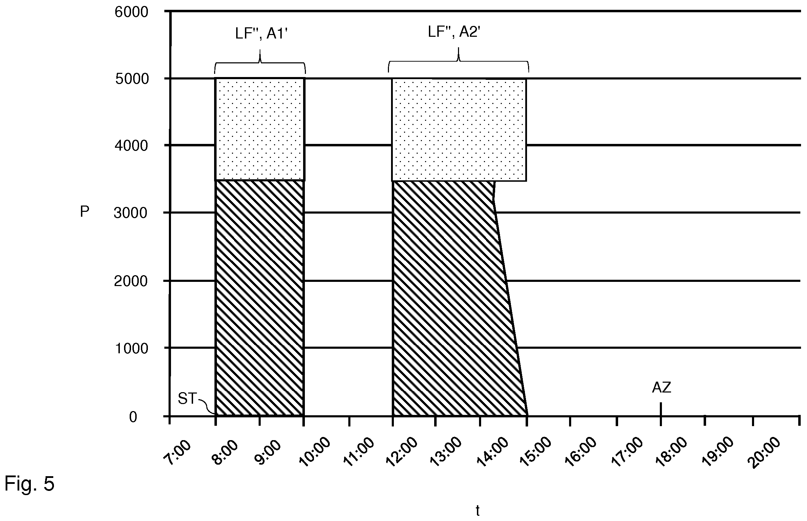

Fig. 4 zeigt eine mit dem erfindungsgemäßen Verfahren durchgeführte Modifikation des Ladezeitfensters LF, wodurch ein modifiziertes Ladezeitfenster LF' erhalten wird, welches sich in einen vorverlegten Zeitabschnitt A1 und einen späteren Zeitabschnitt A2 aufteilt. Das Ladezeitfenster LF' wurde derart erhalten, dass der sich an das Ende des Ladezeitfensters LF der Fig. 3 anschließende Zeitabschnitt des Ladevorgangs, in dem noch keine Degradation aufgetreten ist, auf den Zeitpunkt ST des Anschlusses des Fahrzeugs zum Laden vorverlegt wird. Der Ladevorgang mit dem Ladezeitfenster LF' ist dabei kostenneutral, denn in dem Abschnitt A2, der dem Ladezeitfenster LF der Fig. 3 entspricht, erfolgt weiterhin eine Ladung ohne Degradation. Mit anderen Worten sind die Kosten des Ladevorgangs unter Verwendung des Ladezeitfensters LF' genauso hoch wie für das Ladezeitfenster LF der Fig. 3. Zum Vergleich ist in Fig. 5 eine Modifikation des Ladezeitfensters gezeigt, welche - im Gegensatz zum erfindungsgemäßen Verfahren - zu einer Erhöhung der Kosten des Ladevorgangs führt. In Fig. 5 ist das modifizierte Ladezeitfenster mit LF" bezeichnet und umfasst die Abschnitte A1' und A2'. Dabei wurde ein größerer Abschnitt A1' des Ladevorgangs als in Fig. 4 an den Zeitpunkt ST vorverlegt. Als Konsequenz liegt der hintere Teil des Abschnitts A2' des Ladezeitfensters LF" im Bereich der Degradation der Fahrzeugbatterie. Demzufolge erfolgt weniger Ladung im Zeitraum des günstigen Strompreises, so dass die Stromkosten erhöht sind.

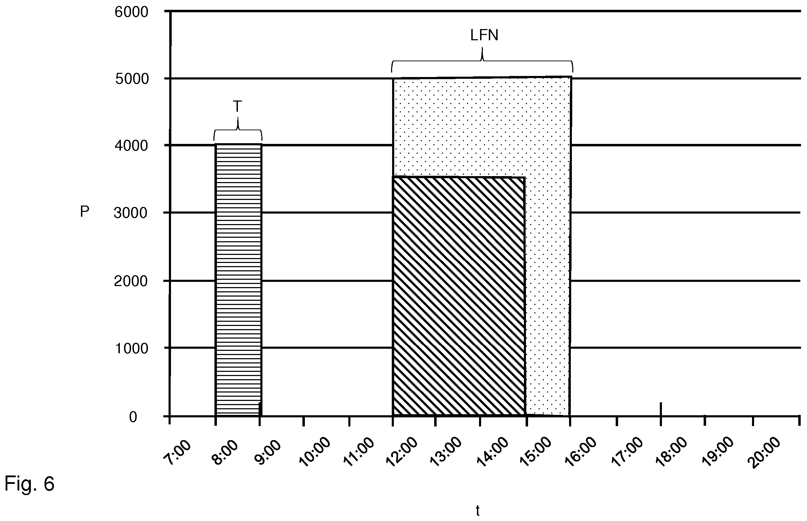

In Fig. 6 ist allgemein in einem Diagramm analog zu den vorhergehenden Figuren 3 bis 5 die Verschiebung eines Ladezeitfensters aufgrund eines Aussetzens des Ladevorgangs verdeutlicht. Der Zeitraum des Aussetzens des Ladevorgangs ist dabei durch den Balken mit der horizontalen Schraffur angedeutet und mit T bezeichnet. Das Aussetzen des Ladevorgangs erfolgt aufgrund eines Befehls von dem Server SE' aus Fig. 1. Der Befehl spezifiziert, um wieviel Leistung das Laden der Fahrzeuge zu vermindern ist. Dabei ist im Falle, dass ein Ladevorgang ausgesetzt wird, vorab als feste Zeitspanne des Aussetzens eine Stunde festgelegt. In dem Szenario der Fig. 6 hat das Ladezeitfenster ursprünglich den Zeitraum T umfasst. Aufgrund des Aussetzens des Ladevorgangs wurde dann eine Verschiebung des Zeitfensters in die Zukunft bewirkt. Dieses verschobene Zeitfenster ist das Zeitfenster LFN aus Fig. 6. Beim Ladevorgang wird dabei nur ein Teil des Zeitfensters ausgenutzt. Dies ist die Folge davon, dass bei der Festlegung des verschobenen Ladezeitfensters LFN ein gewisser Puffer hinzugefügt wurde, der eine geringere prognostizierte Effizienz der Ladung der entsprechenden Fahrzeugbatterie abfangen kann. Gemäß diesem Puffer wird verhindert, dass das Fahrzeug aufgrund eines zu kleinen Ladezeitfensters vor Beginn des Ladezeitfensters zu laden beginnt.

In einer weiteren Variante des erfindungsgemäßen Verfahrens wird der Ladevorgang auch in solchen Fahrzeugen des Fahrzeugpools gestoppt, für welche kein Ladezeitfenster festgelegt ist, sondern die sich im sog. Sofort-Laden-Modus befinden. Gemäß diesem Modus wird das Fahrzeug sofort nach Anschluss an das Stromnetz ohne die Berücksichtigung von Ladezeitfenstern bzw. Abfahrtszeitpunkten bis zum Sollladezustand geladen. In diesem Fall werden beim Aussetzen des Ladens aufgrund eines Befehls des Servers SE' ein Ladezeitfenster sowie eine fiktive Abfahrtszeit festgelegt. Der Ladevorgang ist dabei wiederum derart ausgestaltet, dass die Zeit des Ladevorgangs im Ladezeitfenster liegt bzw. das Ladezeitfenster umfasst und gleichzeitig sichergestellt ist, dass der Sollladezustand spätestens zum Abfahrtszeitpunkt erreicht ist.

Der in Fig. 1 gezeigte stationäre Batteriespeicher SB wird in der hier beschriebenen Ausführungsform nur dann verwendet, wenn die durch den Befehl des Servers SE' spezifizierte Leistungsverminderung nicht durch die Batterien der Fahrzeuge des Fahrzeugpools abgedeckt werden kann. In diesem Fall wird über eine entsprechende Leistungsaufnahme aus dem Stromnetz bzw. Leistungsabgabe in das Stromnetz erreicht, dass sich die gewünschte Verminderung der Leistung in dem Stromnetz ergibt.

In einer Variante des erfindungsgemäßen Verfahrens ist ein Kontingent, d.h. eine Anzahl von aufeinander folgenden Befehlen, vorgegeben, die von dem Stromnetz zur Leistungsreduktion an das Steuersystem gesendet werden. Ist dieses Kontingent erreicht, werden entsprechend veränderte Ladezeitfenster wieder auf die ursprünglichen Einstellungen der Fahrzeugnutzer zurückgesetzt.

Die im Vorangegangenen beschriebenen Ausführungsformen der Erfindung weisen eine Reihe von Vorteilen auf. Insbesondere wird die Steuerung des Ladens eines Pools von Fahrzeugen über ein gemeinsames Steuersystem derart ermöglicht, dass eine Vielzahl von Fahrzeugen bei Anforderungen durch ein Stromnetz ihren Ladevorgang unterbrechen können, ohne dass hierdurch Kundenwünsche im Hinblick auf die Kosten eines Ladevorgangs sowie die Abfahrtszeit des entsprechenden Fahrzeugs modifiziert werden. Auf diese Weise kann der Fahrzeugpool dazu genutzt werden, um in einem Stromnetz Überlasten geeignet auszugleichen.

### Bezugszeichenliste

- 1: Fahrzeuge
- 2: Smartphone
- CO: zentrales Steuersystem
- SE, SE': Server
- SB: stationärer Batteriespeicher
- PT: Portal
- LF, LF', LF", LFN: Ladezeitfenster
- AZ: Abfahrtszeitpunkt
- SL: Sollladezustand
- t: Tageszeit
- P: Leistung
- ST: Zeitpunkt des Anschlusses des Fahrzeugs an das Stromnetz
- A1, A2, A1', A2': Abschnitte von Ladezeitfenstern
- T: Zeitspanne des Aussetzens des Ladens

## Patentansprüche

1. Verfahren zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) aus dem Stromnetz Strom zum Laden eines fahrzeugseitigen Energiespeichers zum Antrieb des jeweiligen Fahrzeugs (1) beziehen, wobei ein zentrales Steuersystem (CO) mit den jeweiligen Fahrzeugen (1) der Gruppe sowie mit einem Server (SE') des Stromnetzbetreibers kommunizieren kann, wobei das zentrale Steuersystem (CO) das Laden zumindest eines Teils der fahrzeugseitigen Energiespeicher in Antwort auf einen empfangenen Reduktionsbefehl aussetzen kann, der vom Server (SE') des Stromnetzbetreibers stammt und einen Leistungsbetrag festlegt, um den die Leistungsaufnahme der Gruppe von Fahrzeugen (1) aus dem Stromnetz zu vermindern ist, wobei
- für ein oder mehrere spezifische Fahrzeuge (1) der Gruppe vorab jeweils ein Ladezeitfenster (LF), ein Abfahrtszeitpunkt (AZ) und ein Sollladezustand (SL) des fahrzeugseitigen Energiespeichers zum Abfahrtszeitpunkt (AZ) festgelegt sind, wobei beim Ladevorgang des fahrzeugseitigen Energiespeichers des jeweiligen spezifischen Fahrzeugs (1) gemäß dem Ladezeitfenster (LF) ein Ladezeitkriterium erfüllt ist, so dass der Ladevorgang ganz im Ladezeitfenster (LF) liegt oder das ganze Ladezeitfenster (LF) umfasst und gleichzeitig sichergestellt ist, dass der Sollladezustand (SL) spätestens zum Abfahrtszeitpunkt (AZ) erreicht ist, wobei ein Kostenwert (KW) für das Ladezeitfenster (LF) gemäß einer Kostenfunktion vorgegeben ist, welche eine Kostenhöhe in Abhängigkeit von dem Ladevorgang gemäß dem Ladezeitfenster (LF) angibt;
**dadurch gekennzeichnet, dass**
- das Ladezeitfenster (LF) und der Abfahrtszeitpunkt (AZ) und der Sollladezustand (SL) für ein jeweiliges spezifisches Fahrzeug (1), welche vorab festgelegt sind, nutzerspezifische Daten sind, welche ein Nutzer des jeweiligen spezifischen Fahrzeugs (1) an einem Endgerät (2) eingegeben hat, wobei diese Daten von dem Endgerät (2) an das zentrale Steuersystem (CO) übermittelt werden;
- das zentrale Steuersystem (CO) zu einem jeweiligen spezifischen Fahrzeug (1) zumindest eines Teils der spezifischen Fahrzeuge (1) ein modifiziertes Ladezeitfenster (LF') übermittelt, woraufhin der Ladevorgang gemäß dem modifizierten Ladezeitfenster (LF') unter Erfüllung des Ladezeitkriteriums bei unverändertem Abfahrtszeitpunkt (AZ) und Sollladezustand (SL) durchgeführt wird, wobei das modifizierte Ladezeitfenster (LF') zumindest einen Zeitabschnitt umfasst, der vor dem Beginn des nicht-modifizierten Ladezeitfenster (LF) liegt und wobei der Kostenwert (KW') gemäß der Kostenfunktion für das modifizierte Ladezeitfenster (LF') genauso groß oder kleiner als der Kostenwert (KW) für das nicht-modifizierte Ladezeitfenster (LF) ist.

2. Verfahren nach Anspruch 1, **dadurch gekennzeichnet, dass** die Kostenfunktion abhängig ist von den monetären Stromkosten für den Ladevorgang gemäß dem Ladezeitfenster (LF, LF') und/oder von der Abgasmenge, die durch das Stromnetz beim Ladevorgang gemäß dem Ladezeitfenster (LF, LF') erzeugt wird, und/oder von dem Anteil an regenerativen Energien, die von dem Stromnetz beim Ladevorgang gemäß dem Ladezeitfenster (LF, LF') verwendet werden, wobei die Kostenhöhe gemäß der Kostenfunktion umso größer ist, je größer die monetären Stromkosten und/oder die Abgasmenge ist und/oder je kleiner der Anteil an regenerativen Energien ist.

3. Verfahren nach einem der vorhergehenden Ansprüche, **dadurch gekennzeichnet, dass** im Falle, dass das zentrale Steuersystem (CO) das Laden des fahrzeugseitigen Energiespeichers eines spezifischen Fahrzeugs (1) in Antwort auf einen Reduktionsbefehl aussetzt, ein neues Ladezeitfenster (LFN), welches von dem aktuell verwendeten Ladezeitfenster (LF, LF') abweicht, an das spezifische Fahrzeug (1) übermittelt, wobei der Beginn des neuen Ladezeitfensters (LFN) nach einem vorgegebenen Zeitraum des Aussetzens des Ladens liegt und ansonsten der Ladevorgang gemäß dem neuen Ladezeitfenster (LFN) das Ladezeitkriterium bei unverändertem Abfahrtszeitpunkt (AZ) und Sollladezustand (SL) erfüllt.

4. Verfahren nach Anspruch 3 oder 4, **dadurch gekennzeichnet, dass** in dem neuen und/oder dem vorbestimmten Ladezeitfenster (LFN) ein Puffer enthalten ist, der eine gegenüber einer erwarteten Ladeeffizienz des fahrzeugseitigen Energiespeichers verminderte Ladeeffizienz berücksichtigt, um zu verhindern, dass der fahrzeugseitige Energiespeicher vor Beginn des neuen Ladezeitfensters (LFN) das Laden beginnt.

5. Verfahren nach einem der vorhergehenden Ansprüche, **dadurch gekennzeichnet, dass**, nachdem eine vorbestimmte Anzahl von Reduktionsbefehlen von dem zentralen Steuersystem (CO) verarbeitet wurden, alle modifizierten Ladezeitfenster (LF') auf die vorab festgelegten Ladezeitfenster (LF) zurückgesetzt werden.

6. Verfahren nach einem der vorhergehenden Ansprüche, **dadurch gekennzeichnet, dass** an das Stromnetz ein stationäres Energiespeichersystem (SB) angeschlossen ist, das durch das zentrale Steuersystem (CO) derart gesteuert wird, dass im Falle, dass die Verminderung der Leistungsaufnahme der Gruppe von Fahrzeugen (1) um den Leistungsbetrag gemäß einem Reduktionsbefehl nicht ausschließlich durch Aussetzen des Ladens von Energiespeichern jeweiliger Fahrzeuge (1) erreicht werden kann, die Leistungsaufnahme des stationären Energiespeichersystems (SB) aus dem Stromnetz verringert oder die Leistungsabgabe des stationären Energiespeichersystems (SB) in das Stromnetz erhöht wird, so dass die Verminderung der Leistungsaufnahme der Gruppe von Fahrzeugen (1), die durch Aussetzen des Ladens von Energiespeichern jeweiliger Fahrzeuge (1) erreicht wird, zuzüglich des Betrags der Verringerung der Leistungsaufnahme oder der Erhöhung der Leistungsabgabe des stationären Energiespeichersystems (SB) dem Leistungsbetrag gemäß dem Reduktionsbefehl entspricht.

7. Zentrales Steuersystem zur Steuerung des elektrischen Ladens einer Gruppe von Fahrzeugen (1), welche elektrisch an ein Stromnetz eines Stromnetzbetreibers angeschlossen sind, wobei die jeweiligen Fahrzeuge (1) Strom zum Laden eines fahrzeugseitigen Energiespeichers zum Antrieb des jeweiligen Fahrzeugs (1) beziehen, wobei das zentrale Steuersystem (CO) mit den jeweiligen Fahrzeugen (1) sowie mit einem Server (SE') des Stromnetzbetreibers kommunizieren kann, wobei das zentrale Steuersystem (CO) das Laden zumindest eines Teils der fahrzeugseitigen Energiespeicher in Antwort auf einen empfangenen Reduktionsbefehl aussetzen kann, der vom Server (SE') des Stromnetzbetreibers stammt und einen Leistungsbetrag festlegt, um den die Leistungsaufnahme der Gruppe von Fahrzeugen (1) aus dem Stromnetz zu vermindern ist, wobei das zentrale Steuersystem zur Durchführung eines Verfahrens nach einem der Ansprüche 1 bis 6 eingerichtet ist.

## Claims

1. Method for controlling the electrical charging of a group of vehicles (1) which are electrically connected to a power grid of a power grid operator, wherein the respective vehicles (1) draw power from the power grid for charging a vehicle-side energy storage for driving the respective vehicle (1), wherein a central control system (CO) can communicate with the respective vehicles (1) of the group as well as with a server (SE') of the power grid operator, wherein the central control system (CO) can suspend the charging of at least a part of the vehicle-side energy storages in response to a received reduction command which originates from the server (SE') of the power grid operator and specifies a power amount by which the power consumption of the group of vehicles (1) from the power grid is to be reduced, wherein
• for one or more specific vehicles (1) of the group, a charging time window (LF), a departure time (AZ) and a target state of charge (SL) of the vehicle-side energy storage at the departure time (AZ) are respectively predetermined, wherein during the charging process of the vehicle-side energy storage of the respective specific vehicle (1) according to the charging time window (LF) a charging time criterion is fulfilled, so that the charging process lies entirely within the charging time window (LF) or comprises the entire charging time window (LF) and at the same time it is ensured that the target state of charge (SL) is reached at the latest at the departure time (AZ), wherein a cost value (KW) for the charging time window (LF) is predetermined according to a cost function which indicates a cost level depending on the charging process according to the charging time window (LF);
**characterized in that**
• the charging time window (LF) and the departure time (AZ) and the target state of charge (SL) for a respective specific vehicle (1), which are predetermined, are user-specific data which a user of the respective specific vehicle (1) has entered on a terminal device (2), wherein these data are transmitted from the terminal device (2) to the central control system (CO);
• the central control system (CO) transmits to a respective specific vehicle (1) of at least a part of the specific vehicles (1) a modified charging time window (LF'), whereupon the charging process is carried out according to the modified charging time window (LF') under fulfilment of the charging time criterion with unchanged departure time (AZ) and target state of charge (SL), wherein the modified charging time window (LF') comprises at least one time section which lies before the beginning of the non-modified charging time window (LF) and wherein the cost value (KW') according to the cost function for the modified charging time window (LF') is equal to or smaller than the cost value (KW) for the non-modified charging time window (LF).

2. Method according to claim 1, **characterized in that** the cost function is dependent on the monetary electricity costs for the charging process according to the charging time window (LF, LF') and/or on the exhaust gas quantity which is generated by the power grid during the charging process according to the charging time window (LF, LF') and/or on the proportion of renewable energies which are used by the power grid during the charging process according to the charging time window (LF, LF'), wherein the cost level according to the cost function is greater the greater the monetary electricity costs and/or the exhaust gas quantity is and/or the smaller the proportion of renewable energies is.

3. Method according to one of the preceding claims, **characterized in that** in the case that the central control system (CO) suspends the charging of the vehicle-side energy storage of a specific vehicle (1) in response to a reduction command, a new charging time window (LFN), which deviates from the currently used charging time window (LF, LF'), is transmitted to the specific vehicle (1), wherein the beginning of the new charging time window (LFN) lies after a predetermined period of suspension of charging and otherwise the charging process according to the new charging time window (LFN) fulfils the charging time criterion with unchanged departure time (AZ) and target state of charge (SL).

4. Method according to claim 3, **characterized in that** in the new and/or the predetermined charging time window (LFN) a buffer is contained which takes into account a charging efficiency reduced compared to an expected charging efficiency of the vehicle-side energy storage, in order to prevent the vehicle-side energy storage from beginning charging before the beginning of the new charging time window (LFN).

5. Method according to one of the preceding claims, **characterized in that**, after a predetermined number of reduction commands have been processed by the central control system (CO), all modified charging time windows (LF') are reset to the predetermined charging time windows (LF).

6. Method according to one of the preceding claims, **characterized in that** a stationary energy storage system (SB) is connected to the power grid, which is controlled by the central control system (CO) in such a way that in the case that the reduction of the power consumption of the group of vehicles (1) by the power amount according to a reduction command cannot be achieved exclusively by suspending the charging of energy storages of respective vehicles (1), the power consumption of the stationary energy storage system (SB) from the power grid is reduced or the power output of the stationary energy storage system (SB) into the power grid is increased, so that the reduction of the power consumption of the group of vehicles (1), which is achieved by suspending the charging of energy storages of respective vehicles (1), plus the amount of the reduction of the power consumption or the increase of the power output of the stationary energy storage system (SB) corresponds to the power amount according to the reduction command.

7. Central control system for controlling the electrical charging of a group of vehicles (1) which are electrically connected to a power grid of a power grid operator, wherein the respective vehicles (1) draw power for charging a vehicle-side energy storage for driving the respective vehicle (1), wherein the central control system (CO) can communicate with the respective vehicles (1) as well as with a server (SE') of the power grid operator, wherein the central control system (CO) can suspend the charging of at least a part of the vehicle-side energy storages in response to a received reduction command which originates from the server (SE') of the power grid operator and specifies a power amount by which the power consumption of the group of vehicles (1) from the power grid is to be reduced, wherein the central control system is configured to carry out a method according to one of claims 1 to 6.

## Revendications

1. Procédé de commande de la charge électrique d'un groupe de véhicules (1) qui sont raccordés électriquement à un réseau électrique d'un opérateur de réseau électrique, dans lequel les véhicules (1) respectifs tirent du courant du réseau électrique pour charger un accumulateur d'énergie côté véhicule pour l'entraînement du véhicule (1) respectif, dans lequel un système de commande central (CO) peut communiquer avec les véhicules (1) respectifs du groupe ainsi qu'avec un serveur (SE') de l'opérateur de réseau électrique, dans lequel le système de commande central (CO) peut suspendre la charge d'au moins une partie des accumulateurs d'énergie côté véhicule en réponse à une commande de réduction reçue qui provient du serveur (SE') de l'opérateur de réseau électrique et fixe un montant de puissance de laquelle la consommation de puissance du groupe de véhicules (1) du réseau électrique doit être réduite, dans lequel
• pour un ou plusieurs véhicules (1) spécifiques du groupe, une fenêtre de temps de charge (LF), un instant de départ (AZ) et un état de charge cible (SL) de l'accumulateur d'énergie côté véhicule à l'instant de départ (AZ) sont respectivement prédéterminés, dans lequel lors du processus de charge de l'accumulateur d'énergie côté véhicule du véhicule (1) spécifique respectif selon la fenêtre de temps de charge (LF) un critère de temps de charge est rempli, de sorte que le processus de charge se trouve entièrement dans la fenêtre de temps de charge (LF) ou comprend la fenêtre de temps de charge (LF) entière et en même temps il est assuré que l'état de charge cible (SL) est atteint au plus tard à l'instant de départ (AZ), dans lequel une valeur de coût (KW) pour la fenêtre de temps de charge (LF) est prédéterminée selon une fonction de coût qui indique un niveau de coût en fonction du processus de charge selon la fenêtre de temps de charge (LF) ;
**caractérisé en ce que**
• la fenêtre de temps de charge (LF) et l'instant de départ (AZ) et l'état de charge cible (SL) pour un véhicule (1) spécifique respectif, qui sont prédéterminés, sont des données spécifiques à l'utilisateur qu'un utilisateur du véhicule (1) spécifique respectif a entrées sur un appareil terminal (2), dans lequel ces données sont transmises de l'appareil terminal (2) au système de commande central (CO) ;
• le système de commande central (CO) transmet à un véhicule (1) spécifique respectif d'au moins une partie des véhicules (1) spécifiques une fenêtre de temps de charge modifiée (LF'), après quoi le processus de charge est effectué selon la fenêtre de temps de charge modifiée (LF') sous respect du critère de temps de charge avec instant de départ (AZ) et état de charge cible (SL) inchangés, dans lequel la fenêtre de temps de charge modifiée (LF') comprend au moins une section de temps qui se trouve avant le début de la fenêtre de temps de charge non modifiée (LF) et dans lequel la valeur de coût (KW') selon la fonction de coût pour la fenêtre de temps de charge modifiée (LF') est égale ou inférieure à la valeur de coût (KW) pour la fenêtre de temps de charge non modifiée (LF).

2. Procédé selon la revendication 1, **caractérisé en ce que** la fonction de coût est dépendante des coûts d'électricité monétaires pour le processus de charge selon la fenêtre de temps de charge (LF, LF') et/ou de la quantité de gaz d'échappement qui est générée par le réseau électrique lors du processus de charge selon la fenêtre de temps de charge (LF, LF') et/ou de la proportion d'énergies renouvelables qui sont utilisées par le réseau électrique lors du processus de charge selon la fenêtre de temps de charge (LF, LF'), dans lequel le niveau de coût selon la fonction de coût est d'autant plus grand que les coûts d'électricité monétaires et/ou la quantité de gaz d'échappement sont plus grands et/ou que la proportion d'énergies renouvelables est plus petite.

3. Procédé selon l'une des revendications précédentes, **caractérisé en ce que** dans le cas où le système de commande central (CO) suspend la charge de l'accumulateur d'énergie côté véhicule d'un véhicule (1) spécifique en réponse à une commande de réduction, une nouvelle fenêtre de temps de charge (LFN), qui diffère de la fenêtre de temps de charge (LF, LF') actuellement utilisée, est transmise au véhicule (1) spécifique, dans lequel le début de la nouvelle fenêtre de temps de charge (LFN) se trouve après une période prédéterminée de suspension de la charge et autrement le processus de charge selon la nouvelle fenêtre de temps de charge (LFN) remplit le critère de temps de charge avec instant de départ (AZ) et état de charge cible (SL) inchangés.

4. Procédé selon la revendication 3, **caractérisé en ce que** dans la nouvelle et/ou la fenêtre de temps de charge prédéterminée (LFN) un tampon est contenu qui prend en compte une efficacité de charge réduite par rapport à une efficacité de charge attendue de l'accumulateur d'énergie côté véhicule, afin d'empêcher que l'accumulateur d'énergie côté véhicule ne commence la charge avant le début de la nouvelle fenêtre de temps de charge (LFN).

5. Procédé selon l'une des revendications précédentes, **caractérisé en ce que**, après qu'un nombre prédéterminé de commandes de réduction ont été traitées par le système de commande central (CO), toutes les fenêtres de temps de charge modifiées (LF') sont réinitialisées aux fenêtres de temps de charge prédéterminées (LF).

6. Procédé selon l'une des revendications précédentes, **caractérisé en ce qu'**un système d'accumulation d'énergie stationnaire (SB) est raccordé au réseau électrique, qui est commandé par le système de commande central (CO) de telle sorte que dans le cas où la réduction de la consommation de puissance du groupe de véhicules (1) du montant de puissance selon une commande de réduction ne peut pas être atteinte exclusivement par suspension de la charge d'accumulateurs d'énergie de véhicules (1) respectifs, la consommation de puissance du système d'accumulation d'énergie stationnaire (SB) du réseau électrique est réduite ou la fourniture de puissance du système d'accumulation d'énergie stationnaire (SB) dans le réseau électrique est augmentée, de sorte que la réduction de la consommation de puissance du groupe de véhicules (1), qui est atteinte par suspension de la charge d'accumulateurs d'énergie de véhicules (1) respectifs, plus le montant de la réduction de la consommation de puissance ou de l'augmentation de la fourniture de puissance du système d'accumulation d'énergie stationnaire (SB) correspond au montant de puissance selon la commande de réduction.

7. Système de commande central pour la commande de la charge électrique d'un groupe de véhicules (1) qui sont raccordés électriquement à un réseau électrique d'un opérateur de réseau électrique, dans lequel les véhicules (1) respectifs tirent du courant pour charger un accumulateur d'énergie côté véhicule pour l'entraînement du véhicule (1) respectif, dans lequel le système de commande central (CO) peut communiquer avec les véhicules (1) respectifs ainsi qu'avec un serveur (SE') de l'opérateur de réseau électrique, dans lequel le système de commande central (CO) peut suspendre la charge d'au moins une partie des accumulateurs d'énergie côté véhicule en réponse à une commande de réduction reçue qui provient du serveur (SE') de l'opérateur de réseau électrique et fixe un montant de puissance de laquelle la consommation de puissance du groupe de véhicules (1) du réseau électrique doit être réduite, dans lequel le système de commande central est configuré pour exécuter un procédé selon l'une des revendications 1 à 6.
